# EUROPEAN PATENT SPECIFICATION

(11) **EP 4 043 280 B1**
(45) Date of publication and mention of the grant of the patent: **20.12.2023**
(21) Application number: 22157109.4
(22) Date of filing: 16.02.2022
(51) Int. Cl.: B60P 3/00

(54) **SELF-PROPELLED VEHICLE FOR HANDLING GLASS-SHEET SUPPORTING RACKS**
SELBSTFAHRENDES FAHRZEUG ZUR HANDHABUNG VON GLASPLATTENTRAGGESTELLEN
VÉHICULE AUTOPROPULSÉ POUR LA MANIPULATION DES BÂTIS DE SUPPORT DE FEUILLES DE VERRE

(30) Priority: 16.02.2021 IT 202100003494
(43) Date of publication of application: 17.08.2022
(73) Proprietor: ITALCARRELLI S.p.A., 36072 Chiampo (VI) (IT)
(72) Inventor: NEGRIN, Alessandro, 36072 CHIAMPO (VI) (IT)
(74) Representative: Studio Torta S.p.A.

(56) References cited:
- FR-A1- 3 086 051
- IT-A1-201800 002 718
- JP-A- 2017 061 204

## Description

### CROSS-REFERENCE TO RELATED APPLICATIONS

This Patent Application claims priority from Italian Patent Application No. 102021000003494 filed on February 16, 2021.

### TECHNICAL FIELD

The present invention relates to a self-propelled vehicle for handling glass-sheet supporting racks.

More specifically, the present invention relates to a self-propelled transporter for handling glass-sheet supporting racks of large dimensions. Use to which the following disclosure will explicitly refer without thereby losing generality.

### BACKGROUND ART

As is known, the transporters for handling glass-sheet supporting racks are self-propelled vehicles of large dimensions that are capable of forking, lifting, horizontally moving and finally resting back on the ground a glass-sheet supporting rack of large dimensions, with the glass sheet/s resting thereon.

This type of self-propelled vehicles is oblong in shape and is longitudinally divided into a front rack-supporting section and into a rear drive section, stably connected to each other and both provided with ground-resting wheels.

The front rack-supporting section is adapted to fork the glass-sheet supporting rack, and is thus provided with a horseshoe-shaped, oblong chassis that extends horizontally and is provided with two large longitudinal beams that extend parallel to the ground and to the vehicle longitudinal axis, and delimit, astride of the midplane of the vehicle, a large oblong and rectilinear central slot or compartment, which is open at the front and is dimensioned so as to accommodate inside itself a glass-sheet supporting rack.

The front rack-supporting section is moreover provided with a pair of idle and non-steering ground-resting wheels that are located at the front ends of the two longitudinal beams, on opposite sides of the central slot or compartment, whereas the rear part of the rack-supporting section is firmly and permanently fixed to the drive section by means of a swing-arms linkage, that keeps the front rack-supporting section and the rear drive section always aligned with each other, astride of the midplane of the vehicle, and simultaneously enables the oblong chassis to move freely with respect to the rear drive section in vertical direction.

The rear drive section, in turn, is normally provided with a pair of driving and steering ground-resting wheels, with a engine assembly adapted to drive into rotation the two driving and steering wheels, and a driver's cab which is intended to accommodate the driver of the vehicle and has therein the steering wheel and the other control members necessary for driving the vehicle.

Additionally, the above-described self-propelled transporters are provided with a hydraulically-operated lifting system, which is capable of varying on command the height from the ground of the oblong chassis, while maintaining the longitudinal beams always parallel to the ground.

Since this type of vehicles has a length greater than 8-10 meters and the driver's cab is located in the rear part of the vehicle with the consequent visibility and maneuverability problems, usually the majority of the self-propelled transporters for handling glass-sheet supporting racks is additionally provided with a driving aid electronic equipment, that helps the driver in the maneuvers for approaching the glass-sheet supporting rack to be handled.

This electronic equipment usually comprises one or more surveillance cameras and a laser scanner, which is firmly fixed to the front end of one of the two longitudinal beams of the chassis and, during the maneuvers for approaching the glass-sheet supporting rack, is capable of detecting the position and the orientation of the glass-sheet supporting rack to be handled. Thanks to the laser scanner, the driving aid electronic equipment is capable of signaling to the driver when the vehicle is aligned with the glass-sheet supporting rack to be handled.

Additionally, the self-propelled transporters provided with an autonomous drive electronic system additionally use the laser scanner for scanning, in real time, the space in front of the front part of the self-propelled vehicle, so as to prevent the self-propelled vehicle from bumping against any objects or obstacles present along its trajectory.

According to the current regulations, in order for the laser scanner to perform the anti-collision function in the self-propelled transporters with autonomous drive, said laser scanner has to be at a height from the ground constant and less than or equal to 20 cm (centimeters).

Since the oblong chassis, during the shifting of the glass-sheet supporting racks, is normally lifted and located at a height from the ground greater than 25 cm (centimeters), in order to comply with the regulations in force, the applicant fixed the laser scanner to the wheel hub of one of the two front wheel assemblies, so that the laser scanner always remains at a constant distance from the ground.

Unfortunately, in this position the laser scanner is very close to the ground and is particularly exposed to collisions, with all operating problems that this entails. Even a slight collision with an object or obstacle of small dimensions, in fact, can be sufficient for tilting the detection plane of the laser scanner to such an extent to prevent the correct functioning of the autonomous drive system, with the consequent emergency locking of the vehicle.

This is a problem that arises very frequently when the self-propelled transporter moves on rough terrains. IT 2018 0000 2718 A1 discloses a A self-propelled vehicle for handling glass-sheet supporting racks similar to the preamble of claim 1.

### DISCLOSURE OF INVENTION

Aim of the present invention is to overcome the operating limits connected to the arrangement of the laser scanner on the wheel hub of one of the two front wheel assemblies of the self-propelled transporter.

In accordance with these aims, according to the present invention there is provided a self-propelled vehicle for handling glass-sheet supporting racks as defined in Claim 1 and preferably, though not necessarily, in any one of the claims dependent thereon.

### BRIEF DESCRIPTION OF THE DRAWINGS

The present invention will now be described with reference to the accompanying drawings, which illustrate a non-limiting example embodiment thereof, wherein:
- Figure 1 is a perspective view of a self-propelled vehicle for handling glass-sheet supporting racks realized according to the teachings of the present invention, with parts removed for clarity's sake;
- Figure 2 is a side view of the self-propelled vehicle illustrated in Figure 1, with parts in section and with parts removed for clarity's sake;
- Figure 3 is a side view of the front part of the self-propelled vehicle illustrated in Figures 1 and 2, in a first operating configuration and with parts in section and parts removed for clarity's sake;
- Figure 4 is a side view of the front part of the self-propelled vehicle illustrated in Figures 1 and 2, in a second operating configuration and with parts in section and parts removed for clarity's sake;
- Figure 5 is a perspective view of the front part of the self-propelled vehicle illustrated in the previous figures, with parts in section and parts removed for clarity's sake; whereas
- Figure 6 is a perspective view of a component of the self-propelled vehicle illustrated in Figure 5, with parts removed for clarity's sake.

### BEST MODE FOR CARRYING OUT THE INVENTION

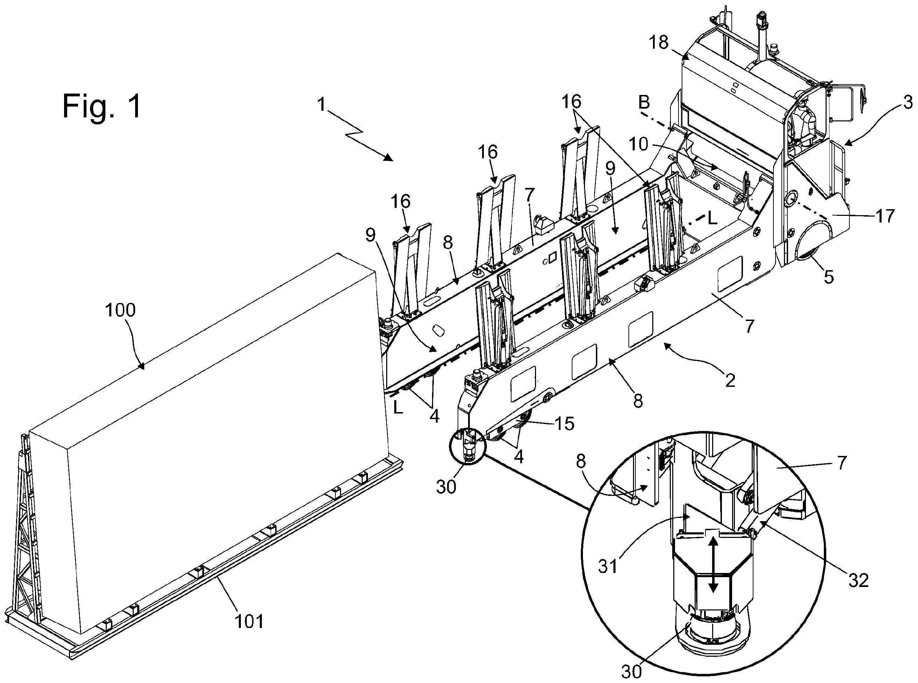

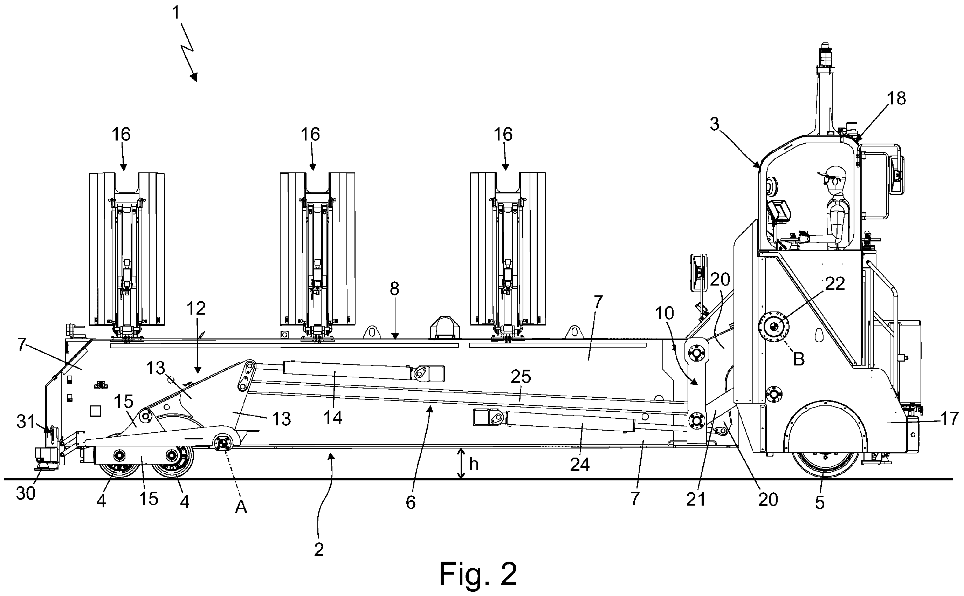

With reference to Figures 1 and 2, reference number 1 denotes, as a whole, a self-propelled vehicle for handling heavy loads, which can be advantageously used for handling, inside a general shed, warehouse, plant or other work area, single glass-sheet supporting racks 100 preferably of large dimensions, i.e. large rigid frames specifically structured for supporting glass sheets or packs of glass sheets of large dimensions, in an nearly vertical position.

In other words, the self-propelled vehicle 1 is preferably structured so as to be able to fork, lift, horizontally shift and finally rest back on the ground single glass-sheet supporting racks 100 preferably with an A-shaped or L-shaped superstructure, with their possible load of glass sheets or packs of glass sheets.

Being a known equipment and easy to find in any plant for the production of glass sheets, the glass-sheet supporting racks 100 won't be further described.

Clearly, the self-propelled vehicle 1 can advantageously be used also for handling in safety loading platforms adapted to support metal plates and/or other product of large dimensions.

With reference to Figures 1 and 2, the self-propelled vehicle 1 is oblong in shape and is provided with a plurality of ground-resting wheels.

More specifically, the self-propelled vehicle 1 is longitudinally divided into a front rack-supporting section 2 and a rear drive section 3, which are aligned one after the other along the vehicle longitudinal axis L, and are stably connected to each other by a mechanical assembly, which is structured so as to maintain the front rack-supporting section 2 and the rear drive section 3 always aligned with each other, astride of the vertical midplane of the vehicle, and simultaneously enables the front rack-supporting section 2 to move freely with respect to the rear drive section 3 in a substantially vertical direction, i.e. orthogonally to the vehicle longitudinal axis L.

The front rack-supporting section 2 is adapted to fork, in a manner known per se, a glass-sheet supporting rack 100, and is provided with at least one pair of ground-resting wheels 4 preferably idle and non-steering, which are arranged in proximity to the front end of the self-propelled vehicle 1, on opposite sides of the vertical midplane of the vehicle, preferably in a substantially specular position with respect to the same midplane.

The rear drive section 3, in turn, is adapted to tow/ push/horizontally move the front rack-supporting section 2, and is provided with at least one pair of ground-resting wheels 5 preferably driving and steering, which are arranged in proximity to the rear end of the self-propelled vehicle 1, on opposite sides of the vertical midplane of the vehicle, preferably in a substantially specular position with respect to the same midplane.

The self-propelled vehicle 1 is thus preferably provided with at least two front ground-resting wheels 4 and with at least two rear ground-resting wheels 5, which are located in pairs on opposite sides of the vertical midplane of the vehicle, substantially at the vertices of a rectangle or of an isosceles trapezoid. Preferably, the rear ground-resting wheels 5 are moreover driving and steering, whereas the front ground-resting wheels 4 are idle and non-steering.

In addition, the self-propelled vehicle 1 is moreover provided with a preferably hydraulically- or pneumatically- operated, lifting apparatus 6 which is capable of varying/ adjusting, on command, the height of the front rack-supporting section 2 relative to the ground, preferably while always maintaining the rack-supporting section 2 parallel to itself and to the ground.

More specifically, with reference to Figures 1 and 2, the front rack-supporting section 2 comprises a large oblong chassis 7 with a substantially U-shaped rigid structure, i.e. substantially horseshoe-shaped, which extends substantially parallel to the ground, i.e. horizontally, and is provided with two long longitudinal tines or beams 8 that extend substantially parallel to the ground and to the vehicle longitudinal axis L, preferably in an nearly specular position on opposite sides of the vertical midplane of the vehicle.

Preferably, the two longitudinal tines or beams 8 moreover have a box-shaped structure.

The two longitudinal beams 8 form/delimit between each other a large oblong and rectilinear central slot or compartment 9, which extends parallel to the vehicle longitudinal axis L, substantially astride of the vertical midplane of the vehicle, is open at the front and is finally dimensioned so as to accommodate therein, or rather to fork, a glass-sheet supporting rack 100.

The front ground-resting wheels 4 are preferably located in proximity to the front/distal ends of the two longitudinal beams 8 of chassis 7, and are oriented parallel to the vehicle longitudinal axis L. In other words, the front ground-resting wheels 4 are arranged with their own rotation axis substantially perpendicular to the vertical midplane of the vehicle.

The rear part of the oblong chassis 7, in turn, is stably connected to the rear drive section 3 preferably by a swing-arms linkage 10, which enables the oblong chassis 7 to freely move with respect to the rear drive section 3 in vertical direction, preferably while remaining always substantially parallel to itself.

The lifting apparatus 6 is adapted to vary/adjust, on command, the height from the ground h of the oblong chassis 7, or rather of the two longitudinal tines or beams 8, preferably while maintaining the two longitudinal tines or beams 8 always substantially parallel to themselves and/or to the ground.

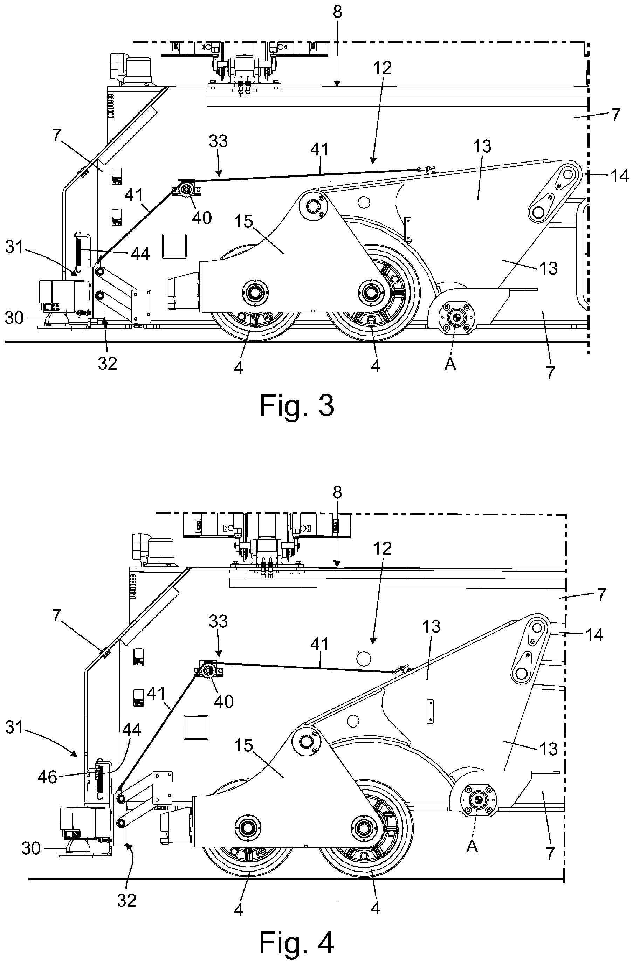

More specifically, the lifting apparatus 6 is adapted to vary, on command, the height from the ground h of the oblong chassis 7 between a minimum value (see Figure 3) in which the two longitudinal beams 8 are preferably substantially grazing the ground, and a maximum value in which the longitudinal beams 8 are preferably lifted from the ground by at least 50 cm (centimeters).

With reference to Figure 1, in addition each longitudinal beam 8 is preferably structured so as to be able to slidingly couple with the plate-like base 101 of the glass-sheet supporting rack 100, so as to support/sustain the glass-sheet supporting rack 100 when the oblong chassis 7 lifts and reaches the maximum distance from the ground.

In other words, the oblong chassis 7 is structured so as to be able to fork the base 101 of a glass-sheet supporting rack 100 oriented parallel to the vehicle longitudinal axis L, slidingly coupling to the same base 101.

More specifically, the oblong chassis 7 is preferably provided, inside the oblong central slot or compartment 9, with a pair of oblong and plate-like protruding longitudinal shelves, which extend cantilevered towards the vertical midplane of the vehicle, each one from the inner lateral side of a respective longitudinal beam 8, while remaining substantially parallel to the ground, i.e. while remaining substantially horizontal.

Preferably, the two longitudinal shelves are moreover substantially coplanar to each other. In other words, the two longitudinal shelves extend cantilevered inside the oblong central slot or compartment 9, one towards the other.

The protruding longitudinal shelves of the two longitudinal beams 8 of chassis 7 are adapted to slidingly couple to the plate-like base 101 of the glass-sheet supporting rack 100, so as to be able to hold/prop the glass-sheet supporting rack 100.

With reference to Figures 2, 3 and 4, the lifting apparatus 6, on the other hand, is preferably interposed between the oblong chassis 7, or rather the longitudinal beams 8, and the front ground-resting wheels 4. Moreover, the lifting apparatus 6 is preferably additionally interposed between the oblong chassis 7 and the swing-arms linkage 10.

More specifically, the vehicle lifting apparatus 6 preferably comprises a pair of swinging-arm suspensions 12, which are interposed between the front/distal ends of the two longitudinal beams 8 and the beneath-located ground-resting wheels 4.

Preferably, each swinging-arm suspension 12 is furthermore housed inside the relative longitudinal beam 8.

More specifically, each swinging-arm suspension 12 preferably comprises: a swinging arm 13, which is pivoted like a rocker-arm on the corresponding longitudinal beam 8 of the oblong chassis 7, in proximity to the distal end of the same beam, so as to be able to rotate/oscillate about a transversal rotation axis A that is substantially horizontal and at same time also perpendicular to the vehicle longitudinal axis L, i.e. substantially perpendicular to the vertical midplane of the vehicle; and a hydraulic or pneumatic cylinder 14 that is interposed between the swinging arm 13 and the body of the longitudinal beam 8, and is capable of varying the inclination/angular position of the swinging arm 12 with respect to the vertical.

The ground-resting wheel 4 is preferably located at the free/bottom end of the swinging arm 13.

In the example shown, in particular, the front/distal end of each longitudinal beam 8 rests on the ground preferably via two idle and non-steering ground-resting wheels 4, which are aligned with and substantially coplanar to each other and are fixed in axially rotatable and idle manner to a small subframe 15 that, in turn, is hinged to the bottom end of the swinging arm 13.

Clearly, in a different embodiment, the front/distal end of each longitudinal beam 8 could rest on the ground via one single idle and non-steering ground-resting wheel 4.

The front rack-supporting section 2, therefore, is preferably provided with two swinging arms 13 that are arranged in a substantially specular position on opposite sides of the vertical midplane of the vehicle, and are pivoted like a rocker-arm on the two longitudinal beams 8 of the chassis 7, so as to be able to separately rotate/swing about a common transversal rotation axis A, while remaining both locally substantially parallel to the vertical midplane of the vehicle.

Preferably, the lifting apparatus 6 furthermore comprises a pneumatic or hydraulic distributor (not visible in the figures) which controls the inflow of the pressurized fluid at inlet of the hydraulic or pneumatic cylinders 14 of the two swinging-arm suspensions 12, so as to control/vary the inclination of the two swinging arms 13 with respect to the vertical, and thus be able to adjust on command the height from the ground of the front/distal ends of the two longitudinal beams 8 of the oblong chassis 7.

With reference to Figures 1 and 2, preferably the front rack-supporting section 2 is moreover also provided with at least one pair of preferably pneumatically- or hydraulically- operated, movable load-locking arms 16 that are mounted cantilevered on the longitudinal beams 8 of the oblong chassis 7, on opposite sides of the vertical midplane of the vehicle and of the central slot or compartment 9, and are capable of moving, on command, each one with respect to the corresponding longitudinal beam 8, from and towards the vertical midplane of the vehicle, so as to bring their own distal/free end in abutment against the load of the glass-sheet supporting rack 100 temporarily accommodated in the central slot or compartment 9.

More specifically, the movable load-locking arms 16 are preferably arranged in pairs in a substantially specular position, on opposite sides of the vertical midplane of the vehicle. Moreover, each movable load-locking arm 16 preferably extends cantilevered upwards from the upper part of the corresponding longitudinal beam 8, and is preferably pivotally joined to the corresponding longitudinal beam 8 so as to be able to move in a swinging manner from and towards the vertical midplane of the vehicle, rotating about a reference axis preferably substantially parallel to the vehicle longitudinal axis L.

Preferably, each movable load-locking arm 16 moreover has an articulated parallelogram structure.

In the example shown, in particular, the front rack-supporting section 2 is preferably provided with three pairs of opposite load-locking arms 16, suitably spaced along the two longitudinal beams 8 of the oblong chassis 7.

With reference to Figures 1 and 2, in turn, the rear drive section 3 preferably comprises a supporting body 17, separate and distinct from the oblong chassis 7, which is arranged astride of the vertical midplane of the vehicle, and is preferably stably connected to the rear part of the oblong chassis 7 by the swing-arms linkage 10.

The rear ground-resting wheels 5 are fixed to the supporting body 17 on opposite sides of the vertical midplane of the vehicle, preferably in a substantially specular position with respect to such midplane, with the capability of rotating about their respective substantially vertical steering axes.

Additionally, the rear drive section 3 comprises: a preferably electrically- or hydraulically- operated, steering assembly (not visible in the figures) that controls the orientation/angle of wheels 5 with respect to the supporting body 17 and to the vehicle longitudinal axis L; and an engine assembly preferably of electric type (not visible in the figures), which is located on the supporting body 17 and is adapted to drive into rotation the rear wheels 5.

More specifically, in the example shown the two ground-resting wheels 5 are preferably placed on a pair of swiveling wheel hubs (not visible in the figures), which are fixed on the supporting body 17 with the capability of freely rotating about respective substantially vertical rotation axes. The steering assembly, in turn, preferably includes two small electric servomotors that are mechanically connected each to a respective swiveling wheel hub, and are capable of rotating on command the same swiveling wheel hub about its vertical rotation axis, so as to vary/control the angular position of the wheel hub with respect to the vehicle longitudinal axis L.

In turn, the engine assembly preferably comprises two large electric motors separate and independent to each other, that are adapted to drive into rotation each a respective ground-resting wheel 5, and are preferably placed each on a respective swiveling wheel hub.

Preferably, the rear drive section 3 of the vehicle is additionally also provided with a driver's cab 18 that is dimensioned for accommodating the driver of the vehicle (i.e. the person driving the self-propelled vehicle 1), and is preferably located/ obtained on the top of the supporting body 17. The steering wheel, the hand lever that controls the rotation speed of the rear wheels 5, and the other manually-operated control members necessary for driving the self-propelled vehicle 1 are preferably located inside the driver's cab 18.

With reference to Figure 2, the swing-arms linkage 10, in turn, is preferably interposed between the supporting body 17 of the rear drive section 3 and the rear part of the oblong chassis 7.

Preferably the swing-arms linkage 10 furthermore comprises: a pair of main swinging arms 20, which extend parallel to the vertical midplane of the vehicle, in a substantially specular position on opposite sides of the vertical midplane of the vehicle, and are aligned each to a respective longitudinal beam 8 of the oblong chassis 7; and a pair of secondary swinging arms 21 that extend parallel to the vertical midplane of the vehicle, in a substantially specular position on opposite sides of the vertical midplane of the vehicle, and are each arranged next to a respective main swinging arm 20.

The main swinging arms 20 preferably have an end hinged to the supporting body 17 of the rear drive section 3 so as to be able to rotate with respect to the latter parallel to the vertical midplane of the vehicle, and are further pivoted like a rocker-arm on the oblong chassis 7 of the front rack-supporting section 2, so as to additionally be able to rotate with respect to the latter always remaining parallel to the vertical midplane of the vehicle.

Preferably, the two main swinging arms 20 are moreover connected in a rigid manner to each other, so as to rotate with respect to the supporting body 17 of rear drive section 3 while remaining always parallel to and aligned with each other.

In the example shown, in particular, the swing-arms linkage 10 preferably includes a large transversal rectilinear shaft 22, which is arranged astride of the vertical midplane of the vehicle, with its longitudinal axis B substantially perpendicular to the same vertical midplane, and is housed in the rear drive section 3, or rather in the supporting body 17, with the capability of freely rotating about its longitudinal axis B. The ends of the two main swinging arms 20 are each preferably keyed in an angularly rigid manner onto a respective axial end of the transversal shaft 22.

Whereas, the secondary swinging arms 21 preferably have the two ends pivotally joined in rotatable manner one to the supporting body 17 of the rear drive section 3 and the other to the oblong chassis 7 of the front rack-supporting section 2, so as to form an articulated-parallelogram structure each one with the adjacent main swinging arm 20.

With reference to Figure 2, preferably the lifting apparatus 6 additionally also comprises two supplementary single-acting or double-acting hydraulic or pneumatic cylinders 24, which are interposed between the main swinging arms 20 of swing-arms linkage 10 and the body of the longitudinal beam 8, and are adapted to vary the inclination of the main swinging arms 20 with respect to the vertical, so as to adjust, on command, the height from the ground of the rear part of the oblong chassis 7.

Preferably, the two supplementary hydraulic or pneumatic cylinders 24 are furthermore housed each inside a respective longitudinal beam 8 of chassis 7.

Clearly, in a simplified version, the lifting apparatus 6 could comprise a single supplementary hydraulic or pneumatic cylinder 24.

Preferably, the lifting apparatus 6 moreover also comprises two oblong in shape, longitudinal coupling rods 25 that are housed each inside a respective longitudinal beam 8, and are adapted to connect each the swinging arm 13 of a respective front swinging-arm suspension 12 with the corresponding and facing main swinging arm 20 of the swing-arms linkage 10.

The two longitudinal coupling rods 25 force the swinging arms 13 of the two front swinging-arm suspensions 12 to rotate in a synchronized manner with the main swinging arms 20 of the swing-arms linkage 10.

Preferably, the hydraulic or pneumatic distributor of lifting apparatus 6 (not visible in the figures) is capable of controlling the inflow of pressurized fluid also to the hydraulic or pneumatic cylinders 24, so as to lift or lower the oblong chassis 7 as desired, preferably while maintaining the longitudinal beams 8 parallel to the ground.

With reference to Figures from 1 to 6, in addition the self-propelled vehicle 1 also comprises: a laser scanner 30 located on the front part of the oblong chassis 7; and a support assembly 31 that firmly connects the laser scanner 30 to the oblong chassis 7, directly holds/supports the laser scanner 30, and is capable of moving the laser scanner 30 vertically with respect to the chassis 7.

Preferably, the self-propelled vehicle 1 is moreover provided with an electronic control device (not shown) which is electronically connected to the laser scanner 30, and is preferably programmed/configured to help the driver in the maneuvers for approaching the glass-sheet supporting rack 100 to be handled and/or for driving the self-propelled vehicle 1 in a completely autonomous manner, i.e. without the presence of the driver.

More specifically, the laser scanner 30 is preferably located at the front end of one of the two longitudinal beams 8, and is adapted to control/scan, preferably continuously, the space in front of/facing the self-propelled vehicle 1, preferably for identifying any objects or obstacles located in proximity to the self-propelled vehicle 1 and/or for identifying the position and/or the orientation of the glass-sheet supporting rack 100 to be handled.

The laser scanner 30 is an electronic component already known and widely used in the field of self-propelled transporters for handling glass-sheet supporting racks, is preferably fixed to support assembly 31 with its detection plane substantially parallel to the ground, i.e. in a substantially horizontal position, and it won't be further described.

The support assembly 31, on the other hand, is adapted to lift and lower the laser scanner 30 with respect to the oblong chassis 7 so as to vary/adjust the height from the ground of the laser scanner 30, preferably while maintaining the detection plane of the laser scanner 30 always substantially parallel to itself.

Preferably the support assembly 31 is furthermore capable of synchronizing the vertical shifts of the laser scanner 30 with the height variations of the chassis 7, so as to maintain the height from the ground of the laser scanner 30 around a predetermined optimum value, regardless of the height from the ground h of the oblong chassis 7.

More specifically, with reference to Figures from 1 to 4, the laser scanner 30 is preferably placed underneath the longitudinal beam 8, approximately at the front end of the beam.

The support assembly 31, in turn, is preferably structured so as to move the laser scanner 30 vertically relative to the oblong chassis 7 between a fully raised position (see Figure 3) in which the laser scanner 30 is preferably at least partially housed/embedded inside the longitudinal beam 8, or is anyway at the minimum distance from the longitudinal beam 8; and a fully lowered position (see Figure 4) in which the laser scanner 30 is suspended spaced beneath the longitudinal beam 8, at a predetermined maximum distance from the relative longitudinal beam 8. Preferably such maximum distance moreover ranges between 20 and 30 cm (centimeters).

Preferably, the support assembly 31 is furthermore structured so as to raise the laser scanner 30 together with the oblong chassis 7, when the height from the ground h of the two longitudinal beams 8 exceeds a given maximum value (for example 40 cm) .

More specifically, with reference to Figures from 1 to 6, the laser scanner 30 is preferably fixed to an intermediate supporting structure 32 that, in turn, is firmly fixed to the oblong chassis 7 and is moreover capable of moving with respect to the oblong chassis 7 in an approximately vertical direction, so as to be able to shift up and down the laser scanner 30 relative to the longitudinal beam 8 immediately above.

In addition to the intermediate supporting structure 32, the support assembly 31 preferably also includes a driving device 33, which is capable of moving the intermediate supporting structure 32 with respect to the chassis 7 in a coordinated manner with the lifting apparatus 6.

More specifically, the driving device 33 is preferably adapted to move the intermediate supporting structure 32 and the laser scanner 30 integral thereto with respect to the oblong chassis 7, so as to maintain the height from the ground of the laser scanner 30 around said given optimum value.

With reference to Figures 3, 4, 5 and 6, in the example shown, in particular, the support assembly 31 is preferably located on the longitudinal beam 8, between the front end of the longitudinal beam 8 and the swinging-arm suspension 12 of the same longitudinal beam 8, and is preferably also at least partially housed/recessed inside the same longitudinal beam 8.

Moreover, the intermediate supporting structure 32 of support assembly 31 preferably consists of, or anyway includes a tilting framework preferably with an articulated parallelogram geometry, which is interposed between the laser scanner 30 and the oblong chassis 7, and is pivotally joined to the oblong chassis 7 so as to move in a swinging manner/oscillate on a swinging plane that is preferably substantially vertical and optionally also substantially parallel to the midplane of the vehicle.

Preferably the tilting framework is furthermore housed inside the longitudinal beam 8.

The driving device 33 of support assembly 31, in turn, is structured so as to rotate said tilting framework upwards and downwards in a swinging manner, so as to vary the distance of the laser scanner 30 from the ground and/or from the longitudinal beam 8 immediately above.

Moreover, the driving device 33 is preferably also structured so as to synchronize the upward and downward movements of the tilting framework with the rotations of the swinging arm 13 of the adjacent swinging-arm suspension 12.

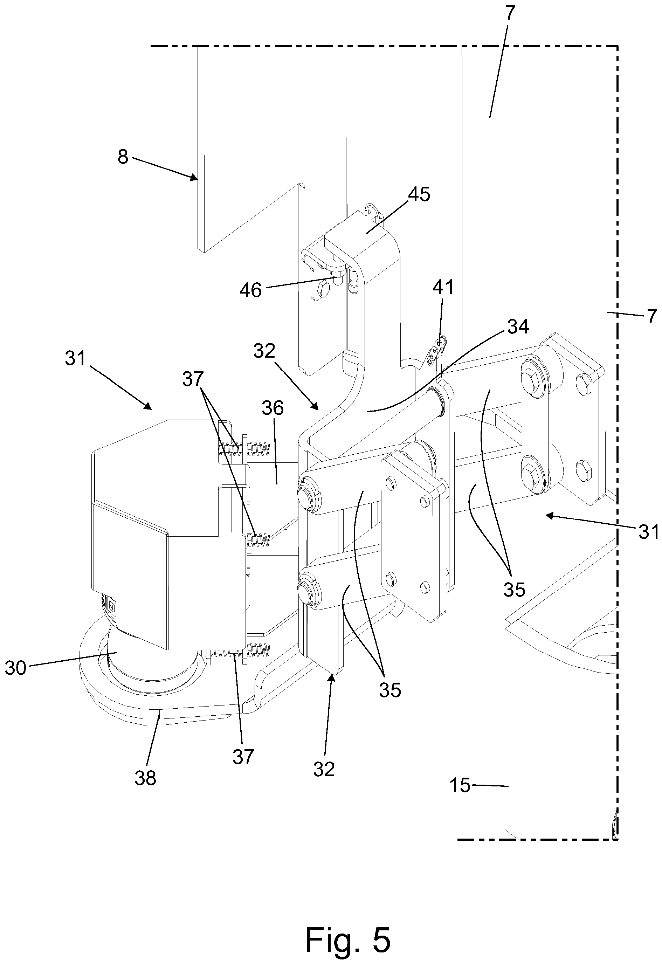

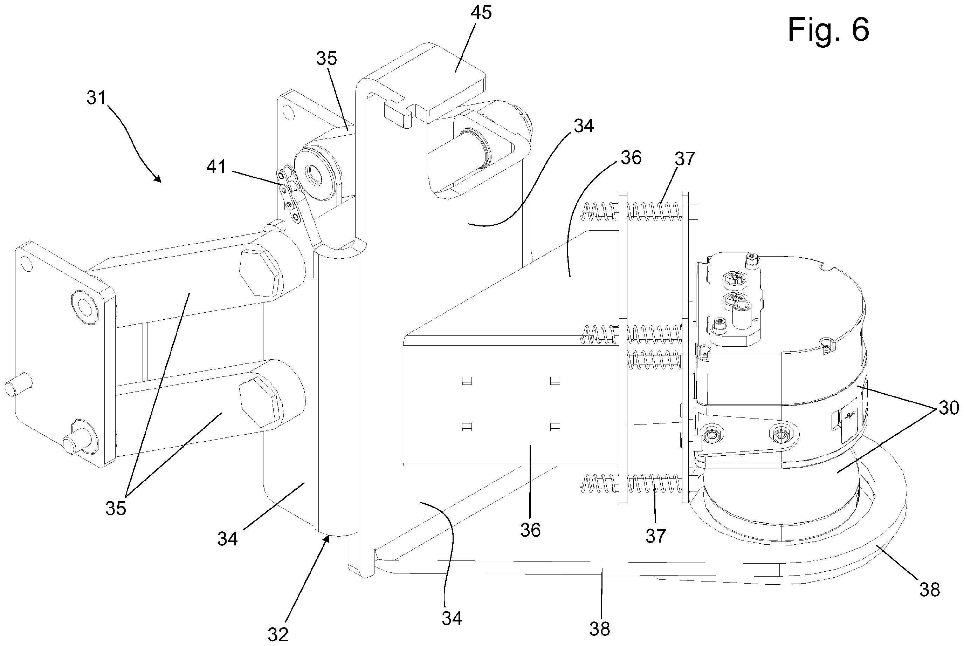

With reference to Figures 5 and 6, in the example shown, in particular, the intermediate supporting structure 32 of support assembly 31, or rather the tilting framework, preferably comprises: a plate-like bracket 34 arranged in a substantially vertical position, inside the longitudinal beam 8; two pairs of swinging arms 35 that are parallel to the vertical midplane of the vehicle, and connect the two vertical sides of the plate-like bracket 34 with the two larger vertical walls of the longitudinal beam 8, forming an articulated parallelogram linkage; and a preferably substantially straight, rigid protruding stem 36 that extends cantilevered from the plate-like bracket 34, preferably while remaining substantially parallel to the ground, and directly supports the laser scanner 30.

More specifically, in the example shown, the rigid stem 36 extends cantilevered from the plate-like bracket 34 preferably towards the outside of the longitudinal beam 8 on the opposite side with respect to the central compartment 9, and the laser scanner 30 is firmly fixed to the distal end of the rigid stem 36 preferably via elastic fixing members 37.

Preferably, the tilting framework finally also includes an protruding protection plate 38 that extends cantilevered from the plate-like bracket 34 substantially parallel to the ground and spaced underneath the rigid stem 36, and extends up to covering and protecting the bottom part of the laser scanner 30.

With reference to Figures 3, 4, 5 and 6, in turn, the driving device 33 preferably mechanically connects the intermediate supporting structure 32, or rather the tilting framework, to the swinging arm 13 of the immediately adjacent swinging-arm suspension 12.

More specifically, the driving device 33 preferably consists of, or anyway includes, a gearing cascade or other mechanism that transmits the rotary motion of the swinging arm 13 of the swinging-arm suspension 12 directly to the immediately adjacent, intermediate supporting structure 32, or rather to the tilting framework.

In the example shown, in particular, the gearing cascade preferably comprises: a gear wheel 40 that lies substantially on the swinging plane of the tilting framework, and is fixed in axially rotatable manner to at least one of the two larger vertical walls of longitudinal beam 8, spaced above the tilting framework; and a connecting chain 41 that is centrally wound in a saddled manner to the gear wheel 40, and has the two ends rigidly fixed one to the tilting framework, preferably at the plate-like bracket 34, and the other to the swinging arm 13 of the immediately adjacent swinging-arm suspension 12.

With reference to Figures 3 and 4, the connecting chain 41 lowers and raises the tilting framework each time the swinging arm 13 of swinging-arm suspension 12 is rotated by the hydraulic or pneumatic cylinder 14, respectively, clockwise and counterclockwise.

Preferably, the driving device 33, or rather the gearing cascade, additionally also comprises an elastic member 44, which is interposed between the tilting framework, or rather the plate-like bracket 34, and the oblong chassis 7, and is adapted to pull downwards said tilting framework in elastic manner.

In addition, the support assembly 31 is preferably also provided with a mechanical travel stop 45, that limits the downward movement of the intermediate supporting structure 32, or rather the downward rotation of the tilting framework, so as to prevent the driving device 33, or rather the gearing cascade, from lowering the laser scanner 30 below a given maximum limit with respect to the longitudinal beam 8.

Preferably, the support assembly 31 is finally also provided with a position sensor 46 that detects when the intermediate supporting structure 32, or rather the tilting framework, rests on the mechanical travel stop 45.

General operation of the self-propelled vehicle 1 is easily inferable from the foregoing, and thus does not require any further explanations.

As regard instead to the support assembly 31, such assembly maintains the laser scanner 30 firmly attached/ suspended beneath the longitudinal beam 8 of the oblong chassis 7, but is capable of varying/adjusting the distance of the laser scanner 30 from the chassis 7, so as to stably maintain the laser scanner 30 at a predetermined and substantially constant distance from the ground beneath.

Moreover, the support assembly 31 is capable of maintaining the distance from the ground of the laser scanner 30 around an optimum value (for example 10-15 cm), which is preferably less than or equal to the maximum height from the ground required by the homologation regulations for the laser scanners 30 that also perform the anti-collision function in the vehicles provided with autonomous drive electronic systems.

Finally, if the height from ground h of the longitudinal beams 8 of the oblong chassis 7 exceeds a predetermined limit value (for example 40 cm), the support assembly 31 hooks the laser scanner 30 to the oblong chassis 7 so as to follow the moments of the latter in vertical diversion.

In this manner, the laser scanner 30 can be temporarily brought to a height from ground such as to prevent the impact with objects or obstacles of large dimensions.

The advantages connected to the presence of the support assembly 31 are evident.

The support assembly 31 succeeds in maintaining the laser scanner 30 at a height from the ground (for example 15 cm) that meets the homologation regulations for the laser scanners 30 with anti-collision function, but prevents the laser scanner 30 from accidentally bumping against any obstacles present along the path of the self-propelled vehicle 1.

Moreover, the capability of moving the laser scanner 30 vertically beneath the longitudinal beam 8 of the oblong chassis 7 prevents the glass-sheet supporting rack 100 at the moment located in the central compartment 9, from covering/limiting somehow the visual field of the laser scanner 30.

Finally, being now fixed to the support assembly 31, the laser scanner 30 is completely isolated from the vibrations produced by the front wheels 4 during the rolling, with all the advantages that this entails for the electronics of the device which is known to be very sensitive to vibrations. The hydraulic accumulators of the swinging-arm suspensions 12, in fact, prevent the vibrations produced by the wheels 4 from being transmitted to the oblong chassis 7.

It is finally clear that modifications and variants may be made to the self-propelled vehicle 1, without however departing from the scope of the present invention.

For example, the laser scanner 30 may be replaced by another type of optoelectronic sensing device.

Moreover, the self-propelled vehicle 1 may additionally be provided with one or more surveillance cameras and/or with one or more additional laser scanners that are suitably distributed on the front and/or rear part of the oblong chassis 7.

Finally, in a more sophisticated not-shown embodiment, the driving device 33 of support assembly 31 can be completely independent of the lifting apparatus 6.

More specifically, the driving device 33 may comprise an electromechanical actuator that moves the intermediate supporting structure 32 upwards and downwards; and an electronic unit that controls the electromechanical actuator on the basis of the signals coming from a distance measuring sensor which is capable of detecting in real time the distance of the laser scanner 30 and/or of the longitudinal beam 8 from the ground.

## Claims

1. A self-propelled vehicle (1) for handling glass-sheet supporting racks (100) of the type comprising a front rack-supporting section (2) and a rear drive section (3), both provided with ground-resting wheels and stably connected to each other by a mechanical assembly (10) that enables the front rack-supporting section (2) to move vertically with respect to the rear drive section (3);
the front rack-supporting section (2) comprising: an oblong chassis (7) which is movable vertically with respect to the rear drive section (3), and is provided with two longitudinal beams (8) that extend parallel to the vehicle longitudinal axis (L) and delimit a large central compartment (9) open at the front and adapted to accommodate a glass-sheet supporting rack (100); at least one pair of front ground-resting wheels (4) that are located underneath said longitudinal beams (8); and at least one optoelectronic sensing device (30) which is adapted to control/scan the space in front of/facing the vehicle;
the self-propelled vehicle (1) being **characterised in that** the optoelectronic sensing device (30) is fixed to said oblong chassis (7) via a support assembly (31) that directly holds/supports said optoelectronic sensing device (30) and is capable of moving said optoelectronic sensing device (30) vertically relative to the oblong chassis (7).

2. The self-propelled vehicle according to Claim 1, wherein said support assembly (31) comprises an intermediate supporting structure (32) which is interposed between said optoelectronic sensing device (30) and said oblong chassis (7), and is capable of moving relative to the oblong chassis (7) so as to move up and down the optoelectronic sensing device (30) relative to said oblong chassis (7).

3. The self-propelled vehicle according to Claim 2, wherein said support assembly (31) additionally comprises driving means (33) capable of moving the intermediate supporting structure (32) relative to the oblong chassis (7) .

4. The self-propelled vehicle according to any one of the preceding claims, **characterised by** additionally comprising a lifting apparatus (6) that is adapted to vary the height of the oblong chassis (7) from the ground (h) while keeping the two longitudinal beams (8) substantially parallel to themselves; said support assembly (31) being adapted to move the intermediate supporting structure (32) with respect to the oblong chassis (7) in a coordinated manner with said lifting apparatus (6).

5. The self-propelled vehicle according to any one of the preceding claims, wherein the optoelectronic sensing device (30) is located at the front end of one of the two longitudinal beams (8) of the oblong chassis (7).

6. The self-propelled vehicle according to any one of the preceding claims, wherein the optoelectronic sensing device (30) is located beneath one of the two longitudinal beams (8) of the oblong chassis (7).

7. The self-propelled vehicle according to Claim 6, wherein said support assembly (31) is adapted to move the optoelectronic sensing device (30) vertically relative to the oblong chassis (7) between a fully raised position in which the optoelectronic sensing device (30) is at the minimum distance from the longitudinal beam (8); and a fully lowered position in which the optoelectronic sensing device (30) is suspended/spaced beneath the longitudinal beam (8), at a predetermined maximum distance from said longitudinal beam (8).

8. The self-propelled vehicle according to any one of Claims from 2 to 7, wherein the intermediate supporting structure (32) includes a tilting framework (34, 35, 26, 37, 38) that is interposed between the optoelectronic sensing device (30) and the oblong chassis (7), and is pivotally joined to the oblong chassis (7) so as to move in a swinging manner on a substantially vertical swinging plane.

9. The self-propelled vehicle according to Claim 8, wherein said tilting framework (34, 35, 26, 37, 38) has an articulated parallelogram geometry.

10. The self-propelled vehicle according to Claim 8 or 9, wherein the swinging plane of said tilting framework (34, 35, 26, 37, 38) is substantially parallel to the vertical midplane of the vehicle.

11. The self-propelled vehicle according to any one of the preceding claims, wherein the two longitudinal beams (8) of the oblong chassis (7) are connected to the beneath-located front ground-resting wheels (4) by corresponding swinging-arm suspensions (12).

12. The self-propelled vehicle according to Claim 11, wherein the swinging arm suspension (12) comprises: a swinging arm (13) which is pivoted like a rocker-arm on the corresponding longitudinal beam (8) so as to rotate/swing about a rotation axis (A) substantially perpendicular to the vertical midplane of the vehicle; and a hydraulic or pneumatic cylinder (14), which is interposed between the swinging arm (13) and the body of the longitudinal beam (8), and is capable of varying, on command, the inclination/ angular position of the swinging arm (12).

13. The self-propelled vehicle according to Claim 12, wherein the driving means (33) of the support assembly (31) mechanically connect the intermediate supporting structure (32) to the swinging arm (13) of the swinging-arm suspension (12) .

14. The self-propelled vehicle according to Claim 13, wherein the driving means (33) of the support assembly (31) comprise a gearing cascade (40, 41) that transmits the rotary motion of the swinging arm (13) of the swinging-arm suspension (12) directly to said intermediate supporting structure (32).

15. The self-propelled vehicle according to any one of the preceding claims, wherein the optoelectronic sensing device (30) is a laser scanner.

16. The self-propelled vehicle according to any one of the preceding claims, wherein the rear part of the oblong chassis (7) is connected to the rear drive section (3) by means of a swing-arms linkage (10).

## Patentansprüche

1. Selbstfahrendes Fahrzeug (1) zum Handhaben von Glasscheibentraggestellen (100) der Bauart, die Folgendes aufweist: einen vorderen Gestelltragabschnitt (2) und einen hinteren Antriebsabschnitt (3), die beide mit auf dem Boden ruhenden Rädern versehen sind und stabil miteinander durch eine mechanische Anordnung (10) verbunden sind, welche ermöglicht, dass der vordere Gestelltragabschnitt (2) sich vertikal bezüglich des hinteren Antriebsabschnitts (3) bewegt;
wobei der vordere Gestelltragabschnitt (2) Folgendes aufweist: ein langgestrecktes Fahrgestell (7), welches vertikal bezüglich des hinteren Antriebsabschnittes (3) bewegbar ist und mit zwei längsverlaufenden Trägern (8) versehen ist, die sich parallel zur Längsachse (L) des Fahrzeugs erstrecken und ein gro-ßes mittiges Abteil (9) begrenzen, welches vorne offen ist und ausgebildet ist, um ein Glasscheibentraggestell (100) aufzunehmen; zumindest ein Paar von vorderen auf dem Boden ruhenden Rädern (4), die unter den längsverlaufenden Trägern (8) angeordnet sind, und zumindest eine optoelektronische Abfühlvorrichtung (30), die ausgebildet ist, um den Raum vor dem Fahrzeug / den zum Fahrzeug weisenden Raum zu prüfen/abzutasten;
wobei das selbstfahrende Fahrzeug (1) **dadurch gekennzeichnet ist, dass** die optoelektronische Abfühlvorrichtung (30) an dem langgestreckten Fahrgestell (7) über eine Traganordnung (31) befestigt ist, die direkt die optoelektronische Abfühlvorrichtung (30) hält/trägt, und fähig ist, die optoelektronische Abfühlvorrichtung (30) vertikal relativ zu dem langgestreckten Fahrgestell (7) zu bewegen.

2. Selbstfahrendes Fahrzeug nach Anspruch 1, wobei die Traganordnung (31) eine Zwischentragstruktur (32) aufweist, die zwischen der optoelektronischen Abfühlvorrichtung (30) und dem langgestreckten Fahrgestell (7) angeordnet ist und fähig ist, sich relativ zum langgestreckten Fahrgestell (7) zu bewegen, um die optoelektronische Abfühlvorrichtung (30) relativ zu dem langgestreckten Fahrgestell (7) auf und ab zu bewegen.

3. Selbstfahrendes Fahrzeug nach Anspruch 2, wobei die Traganordnung (31) zusätzlich Antriebsmittel (33) aufweist, die fähig sind, die Zwischentragstruktur (32) relativ zu dem langgestreckten Fahrgestell (7) zu bewegen.

4. Selbstfahrendes Fahrzeug nach einem der vorhergehenden Ansprüche, **dadurch gekennzeichnet, dass** es zusätzlich eine Hubvorrichtung (6) aufweist, die ausgebildet ist, um die Höhe des langgestreckten Fahrgestells (7) vom Boden (h) zu variieren, während sie die zwei längsverlaufenden Träger (8) im Wesentlichen parallel zueinander hält; wobei die Traganordnung (31) ausgebildet ist, um die Zwischentragstruktur (32) bezüglich des langgestreckten Fahrgestells (7) in koordinierter Weise mit der Hubvorrichtung (6) zu bewegen.

5. Selbstfahrendes Fahrzeug nach einem der vorhergehenden Ansprüche, wobei die optoelektronische Abfühlvorrichtung (30) an dem vorderen Ende von einem der zwei längsverlaufenden Träger (8) des langgestreckten Fahrgestells angeordnet ist.

6. Selbstfahrendes Fahrzeug nach einem der vorhergehenden Ansprüche, wobei die optoelektronische Abfühlvorrichtung (30) unter einem der zwei längsverlaufenden Träger (8) des langgestreckten Fahrgestells (7) angeordnet ist.

7. Selbstfahrendes Fahrzeug nach Anspruch 6, wobei die Traganordnung (31) ausgebildet ist, um die optoelektronische Abfühlvorrichtung (30) vertikal relativ zu dem langgestreckten Fahrgestell (7) zwischen einer vollständig angehobenen Position, in welcher die optoelektronische Abfühlvorrichtung (30) an der minimalen Distanz von dem längsverlaufenden Träger (8) ist, und einer vollständig abgesenkten Position zu bewegen, in welcher die optoelektronische Abfühlvorrichtung (30) unter den längsverlaufenden Träger aufgehängt/beabstandet ist, und zwar an einer vorbestimmten maximalen Distanz von dem längsverlaufenden Träger (8).

8. Selbstfahrendes Fahrzeug nach einem der Ansprüche 2 bis 7, wobei die Zwischentragstruktur (32) ein Kipprahmenwerk (34, 35, 26, 37, 38) aufweist, welches zwischen der optoelektronischen Abfühlvorrichtung (30) und dem langgestreckten Fahrgestell (7) angeordnet ist, und schwenkbar mit dem langgestreckten Fahrgestell (7) verbunden ist, um sich in schwenkender Weise auf einer im Wesentlichen vertikalen Schwenkebene zu bewegen.

9. Selbstfahrendes Fahrzeug nach Anspruch 8, wobei das Kipprahmenwerk (34, 35, 26, 37, 38) eine Gelenkparallelogrammgeometrie hat.

10. Selbstfahrendes Fahrzeug nach Anspruch 8 oder 9, wobei die Schwenkebene des Kipprahmenwerks (34, 35, 26, 37, 38) im Wesentlichen parallel zur vertikalen Mittelebene des Fahrzeugs ist.

11. Selbstfahrendes Fahrzeug nach einem der vorhergehenden Ansprüche, wobei die zwei längsverlaufenden Träger (8) des langgestreckten Fahrgestells (7) mit den darunter angeordneten vorderen auf dem Boden ruhenden Rädern (4) durch entsprechende Schwenkarmaufhängungen (12) verbunden sind.

12. Selbstfahrendes Fahrzeug nach Anspruch 11, wobei die Schwenkarmaufhängung (12) Folgendes aufweist: einen Schwenkarm (13), der wie ein Kipphebel an dem entsprechenden längsverlaufenden Träger (8) geschwenkt wird, so dass er sich um eine Drehachse (A) dreht/schwenkt, die im Wesentlichen senkrecht zur vertikalen Mittelebene des Fahrzeugs ist, und einen hydraulischen oder pneumatischen Zylinder (14), der zwischen dem Schwenkarm (13) und dem Körper des längsverlaufenden Trägers (8) angeordnet ist und fähig ist, auf einen Befehl hin, die Neigung/Winkelposition des Schwenkarms (12) zu variieren.

13. Selbstfahrendes Fahrzeug nach Anspruch 12, wobei die Antriebsmittel (33) der Traganordnung (31) mechanisch die Zwischentragstruktur (32) mit dem Schwenkarm (13) der Schwenkarmaufhängung (12) verbinden.

14. Selbstfahrendes Fahrzeug nach Anspruch 13, wobei die Antriebsmittel (33) der Traganordnung (31) eine Getriebekaskade (40, 41) aufweisen, welche die Drehbewegung des Schwenkarms (13) der Schwenkarmaufhängung (12) direkt auf die Zwischentragstruktur (32) überträgt.

15. Selbstfahrendes Fahrzeug nach einem der vorhergehenden Ansprüche, wobei die optoelektronische Abfühlvorrichtung (30) ein Laserscanner ist.

16. Selbstfahrendes Fahrzeug nach einem der vorhergehenden Ansprüche, wobei der hintere Teil des langgestreckten Fahrgestells (7) mit dem hinteren Antriebsabschnitt (3) durch eine Schwenkarmverbindung (10) verbunden ist.

## Revendications

1. Véhicule autopropulsé (1) pour la manipulation de rayonnages de support de feuilles de verre (100) du type comprenant une section de support de rayonnage avant (2) et une section d'entraînement arrière (3), toutes deux pourvues de roues reposant sur le sol et reliées l'une à l'autre de façon stable par un assemblage mécanique (10) qui permet à la section de support de rayonnage avant (2) de se déplacer verticalement par rapport à la section d'entraînement arrière (3) ;
la section de support de rayonnage avant (2) comprenant : un châssis oblong (7) qui est déplaçable verticalement par rapport à la section d'entraînement arrière (3) et est pourvu de deux poutres longitudinales (8) qui s'étendent parallèlement à l'axe longitudinal du véhicule (L) et délimitent un grand compartiment central (9) ouvert à l'avant et adapté à recevoir un rayonnage de support de feuilles de verre (100) ; au moins une paire de roues avant à appui au sol (4) qui sont situées sous lesdites poutres longitudinales (8) ; et au moins un dispositif de détection optoélectronique (30) qui est adapté à contrôler/balayer l'espace devant le/en face du véhicule ;
le véhicule autopropulsé (1) étant **caractérisé en ce que** le dispositif de détection optoélectronique (30) est fixé audit châssis oblong (7) par l'intermédiaire d'un ensemble de support (31) qui maintient/porte directement ledit dispositif de détection optoélectronique (30) et est capable de déplacer verticalement ledit dispositif de détection optoélectronique (30) par rapport au châssis oblong (7) .

2. Véhicule autopropulsé selon la revendication 1, dans lequel ledit ensemble de support (31) comprend une structure porteuse intermédiaire (32) qui est interposée entre ledit dispositif de détection optoélectronique (30) et ledit châssis oblong (7) et est capable de se déplacer par rapport au châssis oblong (7) de manière à déplacer vers le haut et le bas le dispositif de détection optoélectronique (30) par rapport audit châssis oblong (7).

3. Véhicule autopropulsé selon la revendication 2, dans lequel ledit ensemble de support (31) comprend de plus des moyens d'entraînement (33) capables de déplacer la structure porteuse intermédiaire (32) par rapport au châssis oblong (7).

4. Véhicule autopropulsé selon l'une quelconque des revendications précédentes, **caractérisé en ce qu'**il comprend en outre un appareil de levage (6) qui est adapté à faire varier la hauteur du châssis oblong (7) à partir du sol (h) tout en maintenant les deux poutres longitudinales (8) sensiblement parallèles entre elles ; ledit ensemble de support (31) étant adapté à déplacer la structure porteuse intermédiaire (32) par rapport au châssis oblong (7) de façon coordonnée avec ledit appareil de levage (6).

5. Véhicule autopropulsé selon l'une quelconque des revendications précédentes, dans lequel le dispositif de détection optoélectronique (30) se situe à l'extrémité avant de l'une des deux poutres longitudinales (8) du châssis oblong (7).

6. Véhicule autopropulsé selon l'une quelconque des revendications précédentes, dans lequel le dispositif de détection optoélectronique (30) se situe au-dessous de l'une des deux poutres longitudinales (8) du châssis oblong (7).

7. Véhicule autopropulsé selon la revendication 6, dans lequel ledit ensemble de support (31) est adapté à déplacer le dispositif de détection optoélectronique (30) verticalement par rapport au châssis oblong (7) entre une position totalement relevée dans laquelle le dispositif de détection optoélectronique (30) se trouve à la distance minimale de la poutre longitudinale (8) ; et une position totalement abaissée dans laquelle le dispositif de détection optoélectronique (30) est suspendu/espacé au-dessous de la poutre longitudinale (8), à une distance maximale prédéterminée de ladite poutre longitudinale (8).

8. Véhicule autopropulsé selon l'une quelconque des revendications 2 à 7, dans lequel la structure porteuse intermédiaire (32) comprend un cadre basculant (34, 35, 26, 37, 38) qui est interposé entre le dispositif de détection optoélectronique (30) et le châssis oblong (7) et est relié à pivotement au châssis oblong (7) de manière à se déplacer de manière oscillante sur un plan d'oscillation sensiblement vertical.

9. Véhicule autopropulsé selon la revendication 8, dans lequel ledit cadre basculant (34, 35, 26, 37, 38) présente une géométrie de parallélogramme articulé.

10. Véhicule autopropulsé selon la revendication 8 ou 9, dans lequel le plan d'oscillation dudit cadre basculant (34, 35, 26, 37, 38) est sensiblement parallèle au plan moyen vertical du véhicule.

11. Véhicule autopropulsé selon l'une quelconque des revendications précédentes, dans lequel les deux poutres longitudinales (8) du châssis oblong (7) sont reliées aux roues avant à appui au sol (4) situées en dessous par des suspensions de bras oscillant correspondantes (12).

12. Véhicule autopropulsé selon la revendication 11, dans lequel la suspension de bras oscillant (12) comprend : un bras oscillant (13) que l'on fait pivoter à la façon d'un culbuteur sur la poutre longitudinale correspondante (8) de manière à le faire tourner/osciller autour d'un axe de rotation (A) sensiblement perpendiculaire au plan moyen vertical du véhicule ; et un vérin hydraulique ou pneumatique (14), qui est interposé entre le bras oscillant (13) et le corps de la poutre longitudinale (8), et est capable de faire varier, sur commande, l'inclinaison/la position angulaire du bras oscillant (12) .

13. Véhicule autopropulsé selon la revendication 12, dans lequel les moyens d'entraînement (33) de l'ensemble de support (31) relient mécaniquement la structure porteuse intermédiaire (32) au bras oscillant (13) de la suspension de bras oscillant (12).

14. Véhicule autopropulsé selon la revendication 13, dans lequel les moyens d'entraînement (33) de l'ensemble de support (31) comprennent un train d'engrenages (40, 41) qui transmet le mouvement rotatif du bras oscillant (13) de la suspension de bras oscillant (12) directement à ladite structure porteuse intermédiaire (32).

15. Véhicule autopropulsé selon l'une quelconque des revendications précédentes, dans lequel le dispositif de détection optoélectronique (30) est un système de balayage laser.

16. Véhicule autopropulsé selon l'une quelconque des revendications précédentes, dans lequel la partie arrière du châssis oblong (7) est reliée à la section d'entraînement arrière (3) au moyen d'une biellette de bras oscillant (10).
